Europäisches Patentamt

European Patent Office

Office européen des brevets

(19)

(11) Numéro de publication: **0 288 396 B1**

(12) **FASCICULE DE BREVET EUROPEEN**

(45) Date de publication de fascicule du brevet: **16.09.92**   (51) Int. Cl.⁵: **G03B 23/06**, G03B 23/04

(21) Numéro de dépôt: **88401003.4**

(22) Date de dépôt: **25.04.88**

(54) **Passe-vue pour appareil de projection, et appareil de projection comportant un tel passe-vue.**

(30) Priorité: **24.04.87 FR 8705817**

(43) Date de publication de la demande:
**26.10.88 Bulletin 88/43**

(45) Mention de la délivrance du brevet:
**16.09.92 Bulletin 92/38**

(84) Etats contractants désignés:
**AT DE GB IT NL SE**

(56) Documents cités:
**FR-A- 2 250 134
US-A- 3 609 025
US-A- 3 936 169**

(73) Titulaire: **TECHNIOUES AUDIO-VISUELLES
18, Rue Goubet
F-75019 Paris(FR)**

(72) Inventeur: **Tabarly, Gérard
118, Avenue Jean-Jaurès
F-75019 Paris(FR)**
Inventeur: **Ogliastro, Hervé
6, Rue Molière
F-92400 Courbevoie(FR)**

(74) Mandataire: **CABINET BONNET-THIRION
95 Boulevard Beaumarchais
F-75003 Paris(FR)**

## Description

La présente invention concerne d'une manière générale les appareils de projection du type de ceux mis en oeuvre pour la projection, sur un écran, de vues fixes, communément dites diapositives, et elle vise plus particulièrement la partie de ces appareils de projection, communément appelée passe-vue, propre à permettre d'insérer une à une de telles vues sur le faisceau de projection correspondant.

Plus spécifiquement encore, la présente invention concerne le cas où un tel passe-vue comporte, globalement, parallèlement l'une à l'autre, deux glissières constituant conjointement un guide dans lequel les vues à projeter sont à tour de rôle admises à s'engager avec jeu.

En pratique, c'est par simple gravité qu'une telle vue est admise à s'engager entre de telles glissières.

Il est donc usuellement associé à celles-ci, d'une part, des butées, qui, interposées sur le trajet d'une vue en cours de chute, sont propres à définir in fine pour celle-ci une position de projection bien déterminée, et, d'autre part, pour l'extraction d'une telle vue après sa projection, un bras, ou bras de relevage, monté mobile en va-et-vient de manière à ce que son extrémité libre balaye l'espace compris entre les glissières et l'entraîne ainsi avec lui.

L'un des problèmes à résoudre dans la réalisation des passe-vues de ce type tient à ce que, tout en présentant un même contour, les vues qui sont susceptibles d'y être introduites peuvent être de natures différentes.

En effet, l'entourage de protection de ces vues peut être en matière synthétique ou en carton.

Dans l'un et l'autre cas, les épaisseurs sont notablement différentes.

Il en est de même du profil de la tranche : plus ou moins arrondi pour une vue à entourage en matière synthétique, il est à angles droits relativement vifs pour une vue à entourage en carton.

Pour assurer malgré cela que, en position de projection, chaque vue s'étende dans un plan bien déterminé quelle que soit son épaisseur, faute de quoi il faudrait à chaque fois procéder à une mise au point particulière, il est associé aux glissières du passe-vue des moyens, dits ici par simple commodité moyens de centrage, propres à ramener ainsi systématiquement une telle vue dans un tel plan en intervenant pour ce faire sur deux tranches opposées de cette vue, qui en sont, en pratique les tranches latérales.

En pratique, ces moyens de centrage sont communément constitués par les glissières elles-mêmes, chacune de ces glissières ayant, en regard l'une de l'autre, un profil transversal en V, en pratique symétriquement de part et d'autre du plan recherché, et l'une au moins d'entre elles étant montée mobile parallèlement à elle-même dans ce plan de manière à pouvoir être rapprochée de l'autre pour le serrage de la vue à projeter et ainsi le "centrage" de celle-ci.

Dans les réalisations de ce type connues à ce jour, c'est dans sa totalité que l'une des glissières est ainsi mobile par rapport à l'autre.

Outre la complexité d'ensemble qui en résulte, cette disposition présente des inconvénients, qui sont les suivants.

Tout d'abord, la glissière ainsi mobile étant globalement rectiligne, elle peut ne porter sur la tranche d'une vue que par un point de celle-ci, et ce point peut se situer sur la partie haute de cette tranche ou sur sa partie basse.

Il en résulte alors un risque de mise en biais de la vue entre ces glissières.

En outre, alors que, par rapport à l'autre, la glissière mobile est nécessairement en position écartée, d'attente, lors du lâcher d'une vue à projeter, pour que cette vue puisse s'engager librement dans le passe-vue concerné et atteindre les butées qui y sont prévues pour y définir sa position de projection, elle est inévitablement en position rapprochée, de service, lorsque, consécutivement à la projection de cette vue, intervient le bras de relevage nécessaire à l'extraction de celle-ci.

Le frottement dont est alors l'objet cette vue à sa remontée est de ce fait inévitablement appréciable, au risque de son endommagement et d'incidents de fonctionnement pour l'ensemble.

La présente invention a d'une manière générale pour objet une disposition permettant d'éviter ces inconvénients.

De manière plus précise, elle a tout d'abord pour objet un passe-vue du genre comportant, parallèlement l'une à l'autre, deux glissières à section droite en forme de gouttière constituant conjointement un guide dans lequel la vue à projeter est admise à s'engager avec jeu, avec, associés à ces glissières, d'une part, des butées propres à définir la position de projection d'une telle vue, et, d'autre part, des moyens de centrage propres à intervenir sur deux tranches opposées de ladite vue, les glissières étant l'une et l'autre fixes, les moyens de centrage comportant au moins un doigt presseur, qui, à la faveur d'une ouverture ménagée localement à cet effet dans le fond de l'une desdites glissières, peut être déplacé dans le plan de celles-ci entre une position reculée, d'attente, pour laquelle il est en retrait par rapport audit fond, et une position avancée, de service, pour laquelle il fait saillie sur celui-ci, ce passe-vue étant caractérisé en ce que le doigt presseur comporte, à son extrémité libre, une rainure à section droite en forme de V dont l'arête s'étend dans le plan médian des glissières perpendiculairement à l'axe de projection pour agir comme doigt de centrage pour centrer la vue latéralement et selon l'axe de projection ; elle a encore pour objet un appareil de projection équipé d'un tel passe-vue.

Le doigt de centrage mis en oeuvre suivant l'invention n'intervenant que sur une portion limitée de la tranche d'une vue, le frottement dont est l'objet celle-ci à sa remontée est lui-même avantageusement limité, sinon négligeable.

Il en est d'autant plus ainsi que, suivant une forme préférée de réalisation, un tel doigt de centrage est porté par un bras monté pivotant sur une platine de support, et que, son extrémité libre formant un dièdre, l'arête de ce dièdre est courbe cependant que chacune des facettes qui le constituent est convexe, en sorte qu'un tel doigt de centrage ne porte en pratique qu'en un point, et donc de manière très limitée, sur la tranche d'une vue. On choisit naturellement la distance et la position des doigts de centrage en vue d'un guidage optimum des vues, compte tenu de leur introduction dans le magasin supérieur.

De préférence, il y a ainsi, à distance l'un de l'autre, deux doigts de centrage.

De la sorte, aucune mise en biais d'une vue à projeter n'est à craindre.

Certes, dans la demande de brevet français No 2.250.134, il est décrit un passe-vue dont l'une des glissières est traversée par un doigt formant un dièdre à son extrémité libre.

Mais, l'arête de ce dièdre s'étendant perpendiculairement au plan moyen des glissières, parallèlement donc à l'axe de projection, il ne s'agit pas d'un doigt de centrage au sens de la présente demande, mais d'un simple doigt-presseur, apte à appliquer contre l'autre glissière la vue à projeter.

Un tel doigt-presseur est simplement à même d'assurer le respect, latéralement, c'est-à-dire parallèlement à l'axe de projection, d'un plan de référence, et non pas, comme recherché, le respect, transversalemement à cet axe, d'un plan de projection bien déterminé.

En outre, dans cette demande de brevet français No 2.250.134, un seul doigt est prévu, au risque d'une mise en biais de la vue à projeter.

Les caractéristiques et avantages de l'invention par rapport à un tel art antérieur ressortiront d'ailleurs de la description qui va suivre, à titre d'exemple, en référence aux dessins schématiques annexés sur lesquels :

la figure 1 est, avec des arrachements locaux, une vue en perspective d'un passe-vue suivant l'invention;

la figure 2 est, à échelle supérieure, une vue en élévation-coupe d'une des glissières que comporte ce passe-vue ;

la figure 3 reprend, à échelle supérieure, pour l'un des doigts de centrage associé suivant l'invention à cette glissière, le détail de la figure 2 repéré par un encart III sur cette figure 2 ;

la figure 4 est une vue partielle en coupe transversale du doigt de centrage concerné suivant la ligne IV-IV de la figure 3 ;

la figure 5 est, suivant la figure 4, une vue partielle en coupe transversale de l'une et l'autre des glissières du passe-vue suivant l'invention ;

les figures 6A, 6B, 6C, 6D sont, avec des arrachements locaux, des vues en élévation du passe-vue suivant l'invention, suivant diverses phases de fonctionnement de celui-ci ;

les figures 7A, 7B sont, suivant la figure 5, des vues en coupe transversale illustrant également diverses phases de ce fonctionnement ;

la figure 8 est une vue partielle en perspective, qui, analogue à celle de la figure 1, se rapporte à une variante de réalisation ;

la figure 9 est une vue en coupe transversale qui, analogue à celle de la figure 5, correspond à cette variante de réalisation.

Globalement, et tel qu'illustré sur ces figures, le passe-vue suivant l'invention, qui est destiné à l'équipement d'un appareil de projection, comporte, parallèlement l'une à l'autre, deux glissières 10A, 10B constituant conjointement un guide 11 dans lequel chaque vue 12 à projeter est admise à s'engager avec jeu.

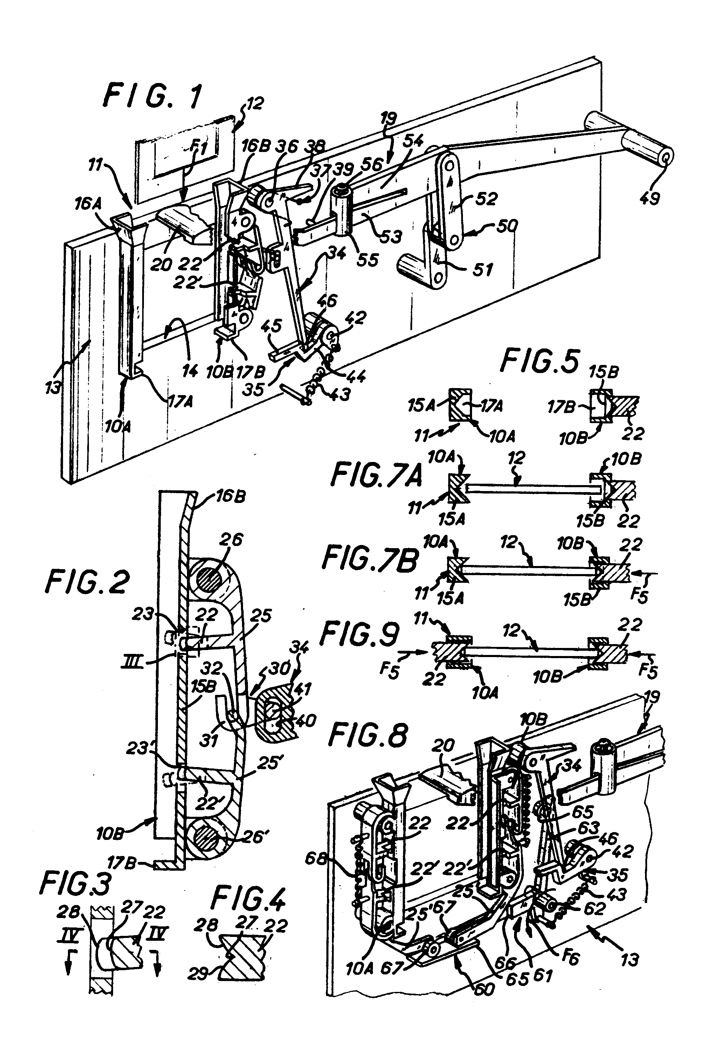

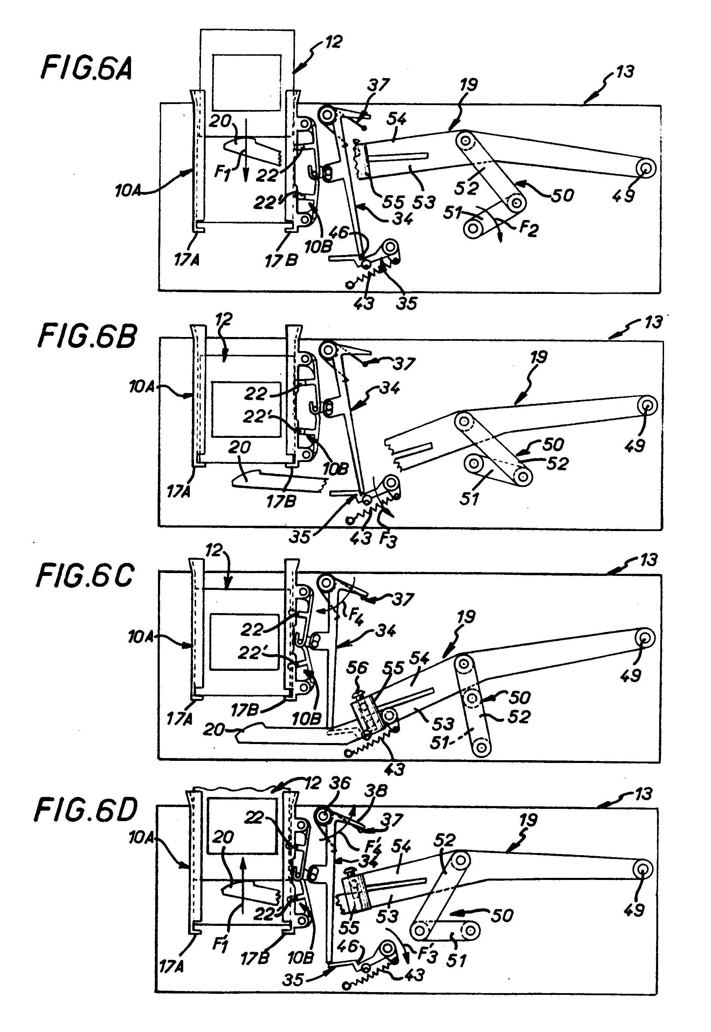

En pratique, une telle vue 12 est destinée à tomber par gravité entre les glissières 10A, 10B, suivant la flèche F1 des figures 1 et 6A.

En pratique, également, les glissières 10A, 10B sont portées par une même platine de support 13, en bordant chacune respectivement les deux bords verticaux d'une ouverture quadrangulaire 14 ménagée dans celle-ci pour le passage du faisceau de projection nécessaire.

Dans les formes de réalisation représentées, cette platine de support 13 est globalement quadrangulaire, toute autre forme demeurant possible.

Dans leur partie courante, au moins, les glissières 10A, 10B, qui sont globalement rectilignes, ont, transversalement, un profil en U, avec leurs concavités respectives tournées l'une vers l'autre.

Pour l'une des glissières, en l'espèce la glissière 10A, le fond 15A correspondant a, intérieurement, un profil transversal en dièdre, figure 5.

Pour l'autre des glissières, en l'espèce, donc, la glissière 10B, et pour des raisons qui apparaîtront ultérieurement, il n'en est pas nécessairement ainsi, et, au contraire, dans la forme de réalisation représentée, le fond 15B de cette glissière 10B est plat.

A leur partie supérieure, les glissières 10A, 10B sont chacune évasées en forme d'entonnoir 16A, 16B, pour faciliter l'engagement entre elles d'une vue 12 à projeter.

A leur partie inférieure, il leur est associé des butées 17A, 17B propres à définir, en fin de course, pour une telle vue 12, une position de projection déterminée.

En pratique, ces butées 17A, 17B sont chacune respectivement constituées par un retour en équerre formé en bout d'un prolongement du fond 15A, 15B des glissières 10A, 10B concernées.

Aux glissières 10A, 10B est en outre associé un bras 19, dit ci-après par simple commodité bras de relevage, propre à en extraire une vue 12 après sa projection, ce bras de relevage 19, qui sera décrit plus en détail ultérieurement, étant à cet effet monté mobile en va-et-vient de manière à ce que son extrémité libre 20 balaye l'espace compris entre les glissières 10A, 10B.

En pratique, cette extrémité libre du bras de relevage 19 forme une palette qui s'étend transversalement entre les glissières 10A, 10B, et dont le profil est arrondi.

Aux glissières 10A, 10B sont enfin associés des moyens de centrage propres à intervenir sur deux tranches opposées d'une vue 12 à projeter.

Suivant l'invention, les glissières 10A, 10B étant l'une et l'autre fixes, en étant donc l'une et l'autre rigidement assujetties à la platine de support 13 qui les porte, ces moyens de centrage comportent au moins un doigt de centrage 22, qui, à la faveur d'une ouverture 23 ménagée localement à cet effet dans le fond de l'une desdites glissières 10A, 10B, est monté mobile entre une position reculée, d'attente, pour laquelle, tel que représenté en trait plein sur la figure 2, il est en retrait par rapport audit fond, et une position avancée, de service, pour laquelle, tel que représenté en traits interrompus sur cette figure 2, il fait saillie sur celui-ci.

Par doigt de centrage 22, on entend ici, un doigt qui, à son extrémité libre, forme, transversalement, à la manière des glissières 10A, 10B, un dièdre dont l'arête, en l'espèce une arête 27, s'étend dans un plan perpendiculaire à l'axe de projection, en l'espèce le plan moyen de ces glissières 10A, 10B, suivant, globalement, le sens d'allongement de celles-ci.

Dans la forme de réalisation plus particulièrement représentée sur les figures 1 à 7, qui sera celle maintenant décrite plus en détail ci-après, il n'est associé un tel doigt de centrage 22 qu'a l'une des glissières 10A, 10B, en l'espèce la glissière 10B.

En pratique, et tel que représenté, il y a, à distance l'un de l'autre, pour cette glissière 10B, deux doigts de centrage 22, 22' propres chacun respectivement à traverser une ouverture 23, 23' de son fond 15B, figure 2.

Chacun respectivement, ces doigts de centrage 22, 22' sont portés par des bras 25, 25' montés pivotants.

Par exemple, ces bras 25, 25', qui s'étendent en direction l'un de l'autre à compter de leurs pivots 26, 26' respectifs, sont montés pivotants sur le fond 15B de la glissière 10B, au dos de ce fond 15B.

Les doigts de centrage 22, 22' s'étendent sensiblement perpendiculairement aux bras 25, 25' qui les portent.

Comme indiqué ci-dessus, leur extrémité libre forme transversalement un dièdre.

Dans la forme de réalisation représentée, et ainsi qu'il est mieux visible pour l'un d'eux, en l'espèce le doigt de centrage 22, sur les figures 3, 4, l'arête 27 de ce dièdre est courbe, et chacune des deux facettes 28, 29 qui le constituent est convexe, en étant cintrée tant parallèlement à ladite arête 27 que transversalement par rapport à celle-ci.

Préférentiellement, et tel que représenté, les deux doigts de centrage 22, 22' ainsi associés à la glissière 10B sont liés en mouvement l'un à l'autre.

Dans la forme de réalisation représentée, ils sont ainsi liés en mouvement l'un à l'autre par une articulation à jeu 30 intervenant entre les bras 25, 25' qui les portent.

En pratique, l'un de ces bras, en l'espèce le bras 25, présente à cet effet, à son extrémité libre, un retour en U 31, tandis que l'autre, et donc, en l'espèce, le bras 25', présente, à son extrémité libre, un tourillon 32 sur lequel est crocheté le retour en U 31 précédent.

Suivant des modalités décrites plus en détail ultérieurement, les doigts de centrage 22, 22' sont sollicités élastiquement en permanence en direction de leur position avancée, et ils sont soumis conjointement à une gâchette 34, qui, elle aussi sollicitée élastiquement, est propre à les retenir en position reculée et est elle-même soumise en libération à une détente 35.

La gâchette 34 est constituée par un levier monté pivotant sur la platine de support 13.

En pratique, son pivot 36 s'étend au voisinage de l'extrémité supérieure de la glissière 10B, et, à cet endroit, où elle est conjointement soumise à des moyens élastiques de rappel constitués en pratique par un ressort de torsion 37, elle porte, latéralement en saillie, en direction opposée à la glissière 10B, un doigt de réarmement 38 qui est interposé sur le trajet d'un ergot 39 solidaire du bras de relevage 19.

Dans sa partie médiane, la gâchette 34 est attelée par un montage à boutonnière aux doigts de centrage 22, 22'.

Par exemple, et tel que représenté, elle comporte, à cet effet, une boutonnière 40 avec laquelle est en prise un ergot 41 solidaire de l'extrémité libre du bras 24 porteur du doigt de centrage 22.

Ainsi, dans cette forme de réalisation, les moyens élastiques de rappel associés à la gâchette 34 bénéficient également aux doigts de centrage 22, 22′.

Autrement dit, ces doigts de centrage 22, 22′ sont, dans ce cas, sollicités élastiquement en direction de leur position avancée de service par les mêmes moyens élastiques que ceux auxquels est conjointement soumise la gâchette 34 associée.

Quoi qu'il en soit, cette gâchette 34 coopère, à son extrémité libre, avec la détente 35.

Dans la forme de réalisation représentée, cette détente 35 est elle-même constituée par un levier, qui est lui aussi monté rotatif, par un pivot 42, sur la platine de support 13, à l'encontre de moyens élastiques, en l'espèce un simple ressort de traction 43 attelé par ailleurs à cette platine de support 13, et qui, présentant, dans sa zone médiane, deux coudes de sens opposés l'un par rapport l'autre, comporte deux tronçons 44, 45 décalés transversalement l'un par rapport à l'autre et séparés l'un de l'autre par un cran 46.

La détente 35 ainsi constituée peut par exemple être asservie au bras de relevage 19.

Il suffit, pour ce faire, qu'elle porte latéralement en saillie un ergot interposé sur le trajet de ce bras de relevage 19.

Mais, elle peut aussi être asservie, directement ou indirectement, à un capteur de présence, non représenté sur les figures, sensible à la présence d'une vue 12 au contact des butées 17A, 17B associées aux glissières 10A, 10B.

Un tel capteur de présence est d'ailleurs usuellement présent dans un appareil de projection, pour la commande en ouverture du volet occultant le faisceau de projection au cours de la chute, entre les glissières 10A, 10B, d'une vue 12 à projeter.

De manière avantageuse, et tel que représenté, le bras de relevage 19 est porté par une même platine que les glissières 10A, 10B, en l'espèce la platine de support 13.

En pratique, il est monté rotatif par un pivot 49, sur cette platine de support 13, à son extrémité opposée à son extrémité libre 20, et, dans sa zone médiane, il est soumis, par un embiellage 50, à l'arbre de sortie d'un moteur non représenté.

Dans la forme de réalisation représentée, cet embiellage 50 comporte une manivelle 51 calée en rotation sur l'arbre de sortie du moteur et une bielle 52 qui est articulée à l'une de ses extrémités à cette manivelle 51 et qui est articulée à l'autre de ses extrémités au bras de relevage 19.

Dans la forme de réalisation représentée, cette bielle 52 se présente sous la forme d'une chape.

Par ailleurs, le bras de relevage 19 est fourchu du côté de son extrémité libre dans la forme de réalisation représentée, ce bras de relevage 19 comportant deux branches 53, 54, dont une, la branche 53, qui en forme la partie active, et qui forme donc son extrémité libre 20 proprement dite, est élastiquement déformable, et est attelée à l'autre, la branche 54, par des moyens de liaison propres à permettre d'en ajuster la distance par rapport à celle-ci.

En pratique, ces moyens de liaison comportent un puits fileté 55, qui est solidaire de la branche 53, et dans lequel est engagée à vissage une vis de réglage 56 propre à prendre appui, par sa tête, sur la branche 54.

En configuration d'attente, figures 1 et 6A, la gâchette 34 est en prise avec le cran 46 de la détente 35, et, à l'encontre du ressort de torsion 37 constituant ses moyens élastiques de rappel, elle maintient en position reculée d'attente les doigts de centrage 22, 22′, figures 2 et 7A.

Conjointement, le bras de levage 19 est en position haute, avec son extrémité libre 20 disposée entre les glissières 10A, 10B, à la partie supérieure de celles-ci.

En début de cycle, la manivelle 51 est entraînée en rotation, suivant la flèche F2 de la figure 6A, par le moteur associé, ce qui conduit le bras de relevage 19 à progressivement s'abaisser, cependant que, lâchée en pratique à partir d'un panier de stockage, la vue 12 à projeter tombe en chute libre entre les glissières 10A, 10B, en suivant, selon les vues, avec un léger retard le bras de relevage 19.

Comme déjà indiqué ci-dessus, un volet obture alors le faisceau de projection correspondant.

Les doigts de centrage 22, 22′ étant en position reculée d'attente, ils ne font pas saillie sur le fond 15B de la glissière 10B, et ils n'interfèrent donc en rien avec le trajet de chute de la vue 12 à projeter.

Après que le bras de relevage 19 soit arrivé en position basse, figure 6B, et que, stoppée par les butées 17A, 17B, la vue 12 à projeter soit elle-même arrivée en position finale de projection et s'y soit stabilisée, le capteur de présence prévu à cet effet contrôle le présence effective d'une telle vue 12 au contact de ces butées 17A, 17B et commande en conséquence, d'une part, une ouverture du volet obturant jusque là le faisceau de projection, et, d'autre part, l'actionnement de la détente 35.

Celle-ci pivote alors à l'encontre de son ressort de rappel 43, suivant la flèche F3 de la figure 6B, en sorte que la gâchette 34 échappe à son cran 46, figure 6C.

Ainsi libérée, la gâchette 34 pivote suivant la flèche F4 de la figure 6C sous la sollicitation du ressort de torsion 37 constituant ses moyens élastiques de rappel, et elle pousse donc en position avancée de service les doigts de centrage 22, 22′.

Tel que schématisé par une flèche F5 à la figure 7B, la vue 12 à projeter se trouve dès lors systématiquement plaquée par ces doigts de centrage 22, 22' contre le fond 15A de la glissière 10A, ce qui, d'une part, la conduit, comme recherché, à se disposer convenablement dans un plan bien déterminé, à savoir le plan médian de symétrie du dièdre formant le fond 15A de cette glissière 10A aussi bien que celui des dièdres formant les extrémités correspondantes des doigts de centrage 22, 22', et, ce qui, d'autre part, la conduit à s'aligner, par sa tranche concernée, sur une ligne de référence bien déterminée, constituée par cette glissière 10A.

Conjointement, le moteur contrôlant le bras de relevage 19 est stoppé.

Dès la commande du changement de vue, il intervient à nouveau, et commande dès lors, suivant la flèche F'1 de la figure 6D, une remontée, le long des glissières 10A, 10B, de la vue 12 qui vient d'être projetée, en agissant pour ce faire, par son extrémité libre en forme de palette 20, sur la tranche inférieure de celle-ci.

Au stade ultime de sa remontée, le bras de relevage 19 agit, par son ergot 39, sur le doigt de réarmement 38 de la gâchette 34, ce qui contraint celle-ci à pivoter, à l'encontre du ressort de torsion 37 constituant ses moyens élastiques de rappel, autour de son pivot 36, suivant la flèche F'4 de la figure 6D.

Ce faisant, cette gâchette 34 contraint les doigts de centrage 22, 22' à revenir à leur position initiale reculée d'attente, cependant que, son extrémité libre balayant le tronçon 45 de la détente 35, elle revient en prise, par celle-ci, avec le cran 46 de cette détente 35 au terme de son mouvement, cette détente 35 se trouvant elle-même sollicitée par son ressort de rappel 43 dans le sens de rotation approprié repéré par une flèche F'3 sur la figure 6D.

La vue 12 qui vient d'être projetée étant ainsi extraite du guide 11 que constituent les glissières 10A, 10B, et la gâchette 34 étant conjointement revenue en position initiale armée, un nouveau cycle peut commencer.

Dans ce qui précède, il n'est associé de doigts de centrage 22, 22' qu'à la seule glissière 10B, en sorte que, comme indiqué, la position de référence d'une vue 12 à projeter se fait par rapport à la glissière 10A.

Il peut en résulter, si les vues à projeter sont de natures différentes, un alignement plus ou moins approximatif par rapport à l'axe du faisceau de projection.

En pratique, le désalignement éventuel par rapport à cet axe est sans inconvénient, un même panier de projection ne comportant usuellement que des vues de même type.

Il suffit en effet de procéder initialement une fois pour toute au réglage nécessaire pour compenser un tel désalignement.

Dans la variante de réalisation représentée sur les figures 8 et 9, il est cependant associé, pour permettre un alignement rigoureux des vues à projeter sur l'axe du faisceau de projection quelle que soit la nature de ces vues, au moins un doigt de centrage, et, en pratique, deux doigts de centrage 22, 22', à chacune des glissières 10A, 10B.

Dans la forme de réalisation représentée, il est établi, d'une glissière 10A, 10B à l'autre, une transmission 60 entre les doigts de centrage 22, 22' concernés, cette transmission 60 comportant un levier de renvoi coudé 61, qui, monté pivotant, par son coude, en 62, sur la platine de support 13, et sollicité élastiquement, est propre, par un premier, 63, de ses bras, à trouver un appui sur la gâchette 34, celle-ci portant alors transversalement à cet effet un galet 65, et qui, par l'autre, 66, de ses bras, est propre à fournir lui-même un appui aux bras 25' portant les doigts de centrage 22' de l'une et l'autre des glissières 10A, 10B, ces bras 25' étant prolongés à cet effet en direction l'un de l'autre à la partie inférieure de ces glissières 10A, 10B, au-delà de celles-ci, et portant eux-mêmes chacun à cet effet un galet 67.

Le ressort 43 constituant les moyens élastiques de rappel de la détente 35 est alors commun à cette détente 35 et à ce levier de renvoi 61, en étant attelé, d'une part, à ladite détente 35, et, d'autre part, audit levier de renvoi 61.

Du fait de l'appui du levier de renvoi 61 sur la gâchette 34, ce ressort 43 constitue également les moyens élastiques de rappel de cette gâchette 34.

Conjointement, dissociés, dès lors, des précédents, les moyens élastiques qui sollicitent en direction avancée de service les doigts de centrage 22, 22' de chacune des glissières 10A, 10B comportent, dans cette forme de réalisation, un ressort 68 distinct, qui est établi entre les bras 25, 25' portant ces doigts de centrage 22, 22', d'un de ces bras 25, 25' à l'autre, plus aucune liaison n'étant par ailleurs prévue entre ceux-ci et la gâchette 34.

Globalement, le fonctionnement de cette variante de réalisation est le même que celui de la forme de réalisation précédente.

Mais, lorsque la gâchette 34 est libérée par la détente 35, le levier de renvoi 61, qui, jusque là, maintient en position reculée les doigts de centrage 22, 22' par son bras 65, pivote autour de son coude sous la sollicition du ressort 43, suivant la flèche F6 de la figure 8, en sorte que, ainsi libérés, et sous la sollicitation des resssorts 68 attelés entre les bras 25, 25' qui les portent, ces doigts de centrage 22, 22' passent, d'une glissière 10A, 10B à l'autre, en position avancée de service, suivant les deux flèches F5, de sens opposés, de la figure 9.

En fin de cycle, la gâchette 34 est ramenée, comme précédemment, en position de réarmement par le bras de levage 19, et, par le galet 65 qu'elle porte, elle ramène elle-même en position de réarmement le levier de renvoi 61, ce qui ramène en position reculée d'attente les doigts de centrage 22, 22′.

Bien entendu, la présente invention ne se limite d'ailleurs pas aux formes de réalisation décrites et représentées, mais englobe toute variante d'exécution et/ou de combinaison de leurs divers éléments.

Ainsi, dans la forme de réalisation représentée, la libération de la détente 35 peut être assurée par un ergot interposé à cet effet sur le trajet du bras de relevage 19. Or, cette libération peut aussi bien être assurée par des moyens classiques, par exemple du type électro-aimant lié à des capteurs de présence, qui agiront directement ou non sur la detente 35. En particulier, le capteur détectant la présence de la vue commande l'ouverture du volet, lequel, dans sa rotation,peut entraîner par came une translation de haut en bas d'un poussoir adapté à agir sur la detente 35.

L'ouverture du volet peut également être utilisée pour la commande du bras 25 (au lieu de la commande décrite par un doigt du bras de relevage 19). Une telle commande sera particulièrement opportune dans le cas de vues (ou caches) différentes de nature et/ou très légères.

Alors que le bras porte-doigt 25 (ou 25′) est monté selon la forme de réalisation détaillée à la figure 2 pivotant sur un axe 26 (ou 26'), dans la forme de réalisation illustrée à la figure 8 les divers bras porte-doigt sont plus simplement accrochés sur des appuis cylindriques ménagés à cet effet à l'extérieur des glissières 10A, 10B.

**Revendications**

1. Passe-vue pour appareil de projection, du genre comportant, parallèlement l'une à l'autre, deux glissières (10A, 10B) à section droite en forme de gouttière constituant conjointement un guide (11) dans lequel la vue (12) à projeter est admise à s'engager avec jeu, avec, associés à ces glissières, d'une part, des butées (17A, 17B) propres à définir la position de projection d'une telle vue, et, d'autre part, des moyens de centrage propres à intervenir sur deux tranches opposées de ladite vue (12), les glissières (10A, 10B) étant l'une et l'autre fixes, les moyens de centrage comportant au moins un doigt-presseur (22, 22'), qui, à la faveur d'une ouverture (23, 23') ménagée localement à cet effet dans le fond (15A, 15B) de l'une desdites glissières (10A, 10B), peut être déplacé dans le plan des glissières (10A, 10B) entre une position reculée, d'attente, pour laquelle il est en retrait par rapport audit fond (15A, 15B), et une position avancée, de service, pour laquelle il fait saillie sur celui-ci, caractérisé en ce que le doigt-presseur (22, 22') comporte à son extrémité libre, une rainure à section droite en forms de V dont l'arête (27) s'étend dans le plan médian desdites glissières (10A, 10B) perpendiculairement a l'axe de projection pour agir commme doigt de centrage pour centrer la vue (12) latéralement et selon l'axe de projection.

2. Passe-vue suivant la revendication 1, caractérisé en ce que le doigt de centrage (22, 22') est porté par un bras (25, 25') monté pivotant.

3. Passe-vue suivant la revendication 2, caractérisé en ce que l'arête (27) de rainure que forme, transversalement, à son extrémité libre, le doigt de centrage (22, 22') est courbe et chacune des deux facettes (28, 29) qui le constituent est convexe, en étant cintrée tant parallèlement à ladite arête (27) que transversalement par rapport à celle-ci.

4. Passe-vue suivant l'une quelconque des revendications 1 à 3, caractérisé en ce que le doigt de centrage (22, 22') est sollicité élastiquement en direction de sa position avancée et il est soumis à une gâchette (34), qui, elle aussi sollicitée élastiquement, est propre à le retenir en position reculée et est elle-même soumise en libération à une détente (35).

5. Passe-vue suivant la revendication 4, caractérisé en ce que la détente (35) est asservie, directement ou indirectement, à un capteur sensible à la présence d'une vue au contact des butées (17A, 17B) associées aux glissières (10A, 10B).

6. Passe-vue suivant la revendication 5, caractérisé en ce que, un bras (19) propre à extraire la vue des glissières après sa projection étant monté mobile en va-et-vient de manière à ce que son extrémité libre (20) balaye l'espace entre lesdites glissières (10A, 10B), la détente (35) est asservie audit bras (19).

7. Passe-vue suivant l'une quelconque des revendications 4 à 6, caractérisé en ce que la détente (35) est constituée par un levier, qui est monté rotatif à l'encontre de moyens élastiques (43), et qui, présentant dans sa zone médiane deux coudes de sens inverses l'un par rapport à l'autre, comporte deux tronçons (44, 45) décalés transversalement l'un par rapport à l'autre, et séparés l'un de l'autre par un cran (46).

**8.** Passe-vue suivant l'une quelconque des revendications 4 à 7, caractérisé en ce que, un bras (19) propre à extraire la vue (12) des glissières (10A, 10B) après sa projection étant monté mobile en va-et-vient de manière à ce que son extrémité libre (20) balaye l'espace entre lesdites glissières (10A, 10B), la gâchette (34) porte un doigt de réarmement (38) qui est interposé sur le trajet d'un ergot (39) solidaire dudit bras (19).

**9.** Passe-vue suivant l'une quelconque des revendications 6, 8, caractérisé en ce que ledit bras (19) est porté par une même platine de support (13) que les glissières (10A, 10B).

**10.** Passe-vue suivant l'une quelconque des revendications 6, 8 et 9, caractérisé en ce que, du côté de son extrémité libre (20), ledit bras (19) est fourchu, ce bras comportant deux branches (53, 54), dont une (53), élastiquement déformable, en forme la partie active et est attelée à l'autre (54) par des moyens de liaison (55, 56) propres à permettre d'en ajuster la distance par rapport à celle-ci.

**11.** Passe-vue suivant l'une quelconque des revendications 1 à 10, caractérisé en ce que, pour l'une au moins des glissières (10A, 10B), il y a, à distance l'un de l'autre, deux doigts de centrage (22, 22′).

**12.** Passe-vue suivant la revendication 11, caractérisé en ce que les deux doigts de centrage (22, 22′) sont liés en mouvement l'un à l'autre.

**13.** Passe-vue suivant les revendications 2 et 12, prises conjointement, caractérisé en ce que les deux doigts de centrage (22, 22′) sont liés en mouvement l'un à l'autre par une articulation à jeu (30) intervenant entre les bras (25, 25′) qui les portent.

**14.** Passe-vue suivant l'une quelconque des revendications 1 à 13, caractérisé en ce qu'il n'est associé au moins un doigt de centrage (22, 22′) qu'à l'une des glissières (10A, 10B).

**15.** Passe-vue suivant les revendications 4 et 14, prises conjointement, caractérisé en ce que le ou les deux doigts de centrage (22, 22′) sont sollicités élastiquement en direction de leur position avancée par les mêmes moyens élastiques que ceux auxquels est conjointement soumise la gâchette (34) associée.

**16.** Passe-vue suivant l'une quelconque des revendications 1 à 13, caractérisé en ce qu'il est associé au moins un doigt de centrage (22, 22′) à chacune des glissières (10A, 10B).

**17.** Passe-vue suivant les revendications 4 et 16, prises conjointement, caractérisé en ce que, d'une glissière (10A, 10B) à l'autre, il est établi une transmission (60) entre les doigts de centrage (22′) concernés, cette transmission (60) comportant un levier coudé (61) qui, monté pivotant et sollicité élastiquement, est propre, par l'un (63) de ses bras, à trouver un appui sur la gâchette (34), et qui, par l'autre (66) de ses bras, est propre à fournir un appui aux bras (25′) portant lesdits doigts de centrage (22′).

**18.** Passe-vue suivant la revendication 17, caractérisé en ce que, deux doigts de centrage (22, 22′) etant associés à chacune des glissières, les moyens élastiques qui les sollicitent en direction de leur position avancée comportent un ressort (68) établis entre les bras (25, 25′) qui les portent.

**19.** Appareil de projection comportant un passe-vue conforme à l'une quelconque des revendications 1 à 18.

**Claims**

**1.** A slide changing arrangenent for a projection apparatus, of the type comprising, in mutually parallel relationship, two sliding guides (10A, 10B) of a cross-section of gutter-like configuration which jointly constitute a guide (11) into which the slide (12) to be projected is admitted to be engaged therein with clearance, with, in association with said sliding guides, on the one hand, abutments (17A, 17B) for defining the position for projection of such a slide and, on the other hand, centering means for acting on two opposite edge faces of said slide (12), the sliding guides (10A, 10B) both being fixed, the centering means comprising at least one pressing finger (22,22') which by virtue of an opening (23, 23') provided locally for that purpose in the bottom (15A, 15B) of one of said sliding guides (10A, 10B) can be displaced in the plane of the sliding guides (10A, 10B) between a retracted waiting position in which it is withdrawn with respect to said bottom (15A, 15B) and an advanced operative position in which it projects in relation thereto, characterised in that the pressing finger (22, 22') comprises at its free end a groove of a cross-section of V-shaped configuration whose apex (27) extends in the median plane of said sliding guides (10A, 10B) perpendicularly to the axis of projection to act as a centering finger for centering the slide (12) laterally and on the axis of projection.

2. A slide changing arrangement according to claim 1 characterised in that the centering finger (22, 22') is carried by a pivotally mounted arm (25, 25').

3. A slide changing arrangement according to claim 2 characterised in that the apex (27) of the groove which the centering finger (22, 22') forms transversely at its free end is curved and each of the two surfaces (28, 29) which constitute it is convex, being cambered both parallel to said apex (27) and transversely with respect thereto.

4. A slide changing arrangement according to any one of claims 1 to 3 characterised in that the centering finger (22, 22') is resiliently urged towards its advanced position and it is subjected to the action of a pawl (34) which, also subjected to a resilient force, is capable of retaining it in the retracted position and is itself subjected in respect of liberation thereof to the action of a detent member (35).

5. A slide changing arrangement according to claim 4 characterised in that the detent member (35) is directly or indirectly subject to the control of a sensor which is responsive to the presence of a slide in contact with the abutments (17A, 17B) which are associated with the sliding guides (10A, 10B).

6. A slide changing arrangement according to claim 5 characterised in that, an arm (19) for extracting the slide from the sliding guides after projection thereof being mounted reciprocatingly movably in such a way that its free end (20) sweeps the space between said sliding guides (10A, 10B), the detent member (35) is under the control of said arm (19).

7. A slide changing arrangement according to any one of claims 4 to 6 characterised in that the detent member (35) is formed by a lever which is mounted rotatably against resilient means (43) and which, having in its median zone two mutually oppositely directed elbow bends, comprises two portions (44, 45) which are transversely displaced relative to each other and which are separated from each other by a catch portion (46).

8. A slide changing arrangement according to any one of claims 4 to 7 characterised in that, an arm (19) for extracting the slide (12) from the sliding guides (10A, 10B) after projection thereof being mounted reciprocatingly movably in such a way that its free end (20) sweeps the space between said sliding guides (10A, 10B), the pawl (34) carries a re-arming finger (38) which is interposed on the path of movement of a lug (39) which is fixed with respect to said arm (19).

9. A slide changing arrangement according to either one of claims 6 and 8 characterised in that said arm (19) is carried by the same support plate (13) as the sliding guides (10A, 10B).

10. A slide changing arrangement according to any one of claims 6, 8 and 9 characterised in that, at its free end (20), said arm (19) is forked, said arm comprising two limbs (53, 54) of which one (53), being resiliently deformable, forms the active part thereof and is coupled to the other (54) by connecting means (55, 56) for permitting the distance thereof relative to same to be adjusted.

11. A slide changing arrangement according to any one of claims 1 to 10 characterised in that, for one at least of the sliding guides (10A, 10B), there are two centering fingers (22, 22') at a spacing from each other.

12. A slide changing arrangement according to claim 11 characterised in that the two centering fingers (22, 22') are linked together in respect of their movement.

13. A slide changing arrangement according to claims 2 and 12 in combination characterised in that the two centering fingers (22, 22') are linked together in respect of their movement by a pivotal connection (30) having play, between the arms (25, 25') which carries the centering fingers.

14. A slide changing arrangement according to any one of claims 1 to 13 characterised in that there is associated at least one centering finger (22, 22') only with one of the sliding guides (10A, 10B).

15. A slide changing arrangement according to claims 4 and 14 in combination characterised in that the centering finger or fingers (22, 22') are resiliently urged towards their advanced position by the same resilient means as those to which the associated pawl (34) is jointly subjected.

16. A slide changing arrangement according to any one of claims 1 to 13 characterised in that at least one centering finger (22, 22') is associated with each of the sliding guides (10A, 10B).

17. A slide changing arrangement according to claims 4 and 16 in combination characterised in that, from one sliding guide (10A, 10B) to the other, there is a transmission (60) as between the centering fingers (22') in question, said transmission (60) comprising an angle lever (61) which, mounted pivotally and subjected to a resilient force, is capable by means of one (63) of its arms of bearing against the pawl (34) and which by means of the other (66) of its arms is capable of providing a support for the arms (25') carrying said centering fingers (22').

18. A slide changing arrangement according to claim 17 characterised in that, two centering fingers (22, 22') being associated with each of the sliding guides, the resilient means which urge them in the direction of their advanced position comprise a spring (68) disposed between the arms (25, 25') which carry them.

19. A projection apparatus comprising a slide changing arrangement according to any one of claims 1 to 18.

**Patentansprüche**

1. Dia-Wechselvorrichtung für Diaprojektoren, die parallel zueinander zwei Gleitschienen (10A, 10B) mit einem rinnenförmigen Querschnitt aufweist, die miteinander eine Führung (11) bilden, in welche das zu projizierende Dia (12) mit Spiel eintreten kann, wobei zu diesen Gleitschienen einerseits Anschläge (17A, 17B) gehören, welche die Projektionsstellung eines solchen Dias festlegen, und andererseits eine Zentriervorrichtung gehört, welche auf zwei entgegengesetzte Kanten des Dias (12) einwirkt, wobei die Gleitschienen (10A, 10B) beide befestigt sind, die Zentriervorrichtung mindestens einen Druckfinger (22, 22') aufweist, der vor einer Öffnung (23, 23') angeordnet ist, die örtlich zu diesem Zweck im Boden (15A, 15B) der einen der Gleitschienen (10A, 10B) ausgebildet ist, und in der Ebene der Gleitschienen (10A, 10B) zwischen einer zurückgezogenen Bereitschaftsstellung, in welcher er bezügliche des Bodens (15A, 15B) zurückgezogen ist, und einer vorgeschobenen Arbeitsstellung, in welcher er von diesem vorsteht, bewegbar ist, dadurch gekennzeichnet, daß der Druckfinger (22, 22') an seinem freien Ende eine Nut mit V-förmigem Querschnitt aufweist, deren Kante (27) sich in der Mittelebene der Gleitschienen (10A, 10B) senkrecht zur Projektionsachse erstreckt, um als Zentrierfinger zum Zentrieren des Dias (12) in seitlicher Richtung und gemäß der Projektionsachse zu wirken.

2. Dia-Wechselvorrichtung nach Anspruch 1, dadurch gekennzeichnet, daß der Zentrierfinger (22, 22') von einem schwenkbar montierten Arm (25, 25') getragen ist.

3. Dia-Wechselvorrichtung nach Anspruch 2, dadurch gekennzeichnet, daß die Kante (27) der Nut, die der Zentrierfinger (22, 22') quer an seinem freien Ende bildet, gebogen ist und jede ihrer sie bildenden zwei Facetten (28, 29) konvex und sowohl parallel wie quer zu dieser Kante (27) gewölbt ist.

4. Dia-Wechselvorrichtung nach einem der Ansprüche 1 bis 3, dadurch gekennzeichnet, daß der Zentrierfinger (22, 22') in Richtung seiner vorgeschobenen Stellung elastisch beaufschlagt ist und ein Aufhalter (34) auf ihn einwirkt, der seinerseits elastisch beaufschlagt ist und geeignet ist, ihn in der zurückgezogenen Stellung zurückzuhalten und seinerseits durch einen Auslöser (35) freigesetzt wird.

5. Dia-Wechselvorrichtung nach Anspruch 4, dadurch gekennzeichnet, daß der Auslöser (35) direkt oder indirekt von einem Fühler gesteuert ist, der auf die Anwesenheit eines Dias in Berührung mit den Anschlägen (17A, 17B) anspricht, welche den Gleitschienen (10A, 10B) zugeordnet sind.

6. Dia-Wechselvorrichtung nach Anspruch 5, dadurch gekennzeichnet, daß ein Arm (19) zum Ausbringen des Dias aus den Gleitschienen reziprok beweglich montiert ist, so daß sein freies Ende (20) den Raum zwischen den Gleitschienen (10A, 10B) überstreicht, wobei der Auslöser (35) von diesem Arm (19) gesteuert ist.

7. Dia-Wechselvorrichtung nach einem der Ansprüche 4 bis 6, dadurch gekennzeichnet, daß der Auslöser (35) aus einem Hebel besteht, der gegen die Wirkung einer elastischen Vorrichtung (43) drehbar montiert ist und in seinem Mittelbereich zwei Kniebiegungen von zueinander entgegengesetzter Richtung und zwei quer zueinander versetzte Abschnitte (44, 45) aufweist, die voneinander durch eine Raste (46) getrennt sind.

8. Dia-Wechselvorrichtung nach einem der Ansprüche 4 bis 7, dadurch gekennzeichnet, daß ein Arm (19) zum Ausbringen des Dias (12) aus den Gleitschienen (10A, 10B) nach seiner Projektion reziprok beweglich montiert ist, so daß sein freies Ende (20) den Raum zwischen den Gleitschienen (10A, 10B) überstreicht, wobei der Drücker (34) einen Rückstellfinger (38) trägt, der im Weg eines mit dem Arm (19) fest verbundenen Zapfens (39) angeordnet ist.

9. Dia-Wechselvorrichtung nach einem der Ansprüche 6, 8, dadurch gekennzeichnet, daß der Arm (19) von der gleichen Trägerplatine (13) wie die Gleitschienen (10A, 10B) getragen ist.

10. Dia-Wechselvorrichtung nach einem der Ansprüche 6, 8 und 9, dadurch gekennzeichnet, daß der Arm (19) auf der Seite seines freien Endes (20) geschlitzt ist und zwei Schenkel (53, 54) aufweist, von denen der eine (53) elastisch verformbar ist und den aktiven Teil bildet und am anderen (54) durch Verbindungsmittel (55, 56) angebracht ist, welche die Einstellung seiner Abstandes bezüglich des anderen Arms ermöglichen.

11. Dia-Wechselvorrichtung nach einem der Ansprüche 1 bis 10, dadurch gekennzeichnet, daß für mindestens eine der Gleitschienen (10A, 10B) zwei Zentrierfinger (22, 22') in einem Abstand voneinander angeordnet sind.

12. Dia-Wechselvorrichtung nach Anspruch 11, dadurch gekennzeichnet, daß die zwei Zentrierfinger (22, 22') zur Bewegung miteinander gekoppelt sind.

13. Dia-Wechselvorrichtung nach den zusammengefaßten Ansprüchen 2 und 12, dadurch gekennzeichnet, daß die zwei Zentrierfinger (22, 22') zur Bewegung aneinander durch ein Gelenk (30) mit Spiel gekoppelt sind, das zwischen die sie tragenden Arme (25, 25') eingeschaltet ist.

14. Dia-Wechselvorrichtung nach einem der Ansprüche 1 bis 13, dadurch gekennzeichnet, daß nur einer der Gleitschienen (10A, 10B) mindestens ein Zentrierfinger (22, 22') zugeordnet ist.

15. Dia-Wechselvorrichtung nach den zusammengefaßten Ansprüchen 4 und 14, dadurch gekennzeichnet, daß der Zentrierfinger oder die zwei Zentrierfinger (22, 22') durch die gleiche elastische Vorrichtung in Richtung ihrer vorgeschobenen Stellung beaufschlagt sind wie sie gleichzeitig auf den zugehörigen Aufhalter (34) einwirkt.

16. Dia-Wechselvorrichtung nach einem der Ansprüche 1 bis 13, dadurch gekennzeichnet, daß jeder der Gleitschienen (10A, 10B) mindestens ein Zentrierfinger (22, 22') zugeordnet ist.

17. Dia-Wechselvorrichtung nach den zusammengefaßten Ansprüchen 4 und 16, dadurch gekennzeichnet, daß von einer Gleitschiene (10A, 10B) zur anderen eine Transmission (60) zwischen den betreffenden Zentrierfinger (22') vorgesehen ist, wobei diese Transmission (60) einen Kniehebel (61) aufweist, der schwenkbar gehalten und elastisch beaufschlagt ist und mit einem (63) seiner Arme auf den Aufhalter (34) drückt und mit dem anderen (66) seiner Arme auf die Arme (25') drückt, welche die Zentrierfinger (22') tragen.

18. Dia-Wechselvorrichtung nach Anspruch 17, dadurch gekennzeichnet, daß zwei Zentrierfinger (22, 22') für jede der Gleitschienen vorgesehen sind, wobei die sie in Richtung ihrer vorgeschobenen Stellung beaufschlagende elastische Vorrichtung eine Feder (68) aufweist, die zwischen den sie tragenden Armen (25, 25') angeordnet ist.

19. Dia-Projektor, der eine Dia-Wechselvorrichtung nach einem der Ansprüche 1 bis 18 aufweist.

EP 0 288 396 B1

FIG. 1

FIG.2

FIG.3

FIG.4

FIG.5

FIG.7A

FIG.7B

FIG.9

FIG.8

FIG.6A

FIG.6B

FIG.6C

FIG.6D